# EUROPEAN PATENT SPECIFICATION

(11) **EP 0 696 779 B1**
(45) Date of publication and mention of the grant of the patent: **02.10.2002**
(21) Application number: 95110747.3
(22) Date of filing: 10.07.1995
(51) Int. Cl.: G06K 19/10, G06K 19/00

(54) **Data recording medium**
Medium zum Datenaufzeichnen
Support d'enregistrement de données

(30) Priority: 11.07.1994 JP 15877494; 11.07.1994 JP 15877594
(43) Date of publication of application: 14.02.1996
(73) Proprietor: Toppan Printing Co., Ltd., Taito-ku, Tokyo 110-0016 (JP)
(72) Inventor: Kuroiwa, Masao, Kazo-shi, Saitama-ken (JP); Zhang, Songdi, Kasukabe-shi, Saitama-ken (JP); Endo, Tohru, Kasukabe-si, Saitama-ken (JP); Arai, Yoshie, Minamisaitama-gun, Saitama-ken (JP)
(74) Representative: Leson, Thomas Johannes Alois, Dipl.-Ing.

(56) References cited:
- EP-A- 0 656 607
- WO-A-87/01845
- PATENT ABSTRACTS OF JAPAN vol. 16, no. 214 (M-1251) 20 May 1992 & JP,A,04 039 097 (TOKIN CORP.) 10 February 1992
- PATENT ABSTRACTS OF JAPAN vol. 11, no. 375 (P-644) 8 December 1987 & JP,A,62 145 585 (OMRON TATEISI ELECTRONICS CO) 29 June 1987
- PATENT ABSTRACTS OF JAPAN vol. 11, no. 261 (P-609) 25 August 1987 & JP,A,62 066 375 (OMRON TATEISI ELECTRONICS CO) 25 March 1987
- PATENT ABSTRACTS OF JAPAN vol. 18, no. 370 (P-1768) 12 July 1994 & JP,A,06 096 294 (SANKYO SEIKI MFG CO LTD) April 1994

## Description

The present invention relates to a data recording medium with a storing device for storing digital data, and more particularly to a portable data recording medium with a small size and light weight.

An example of such a data recording medium is a money equivalent card including a credit card, cash card, prepaid card, magnetic passbook, or magnetic ticket. It is necessary to prevent the card from being falsified or altered.

As countermeasures for preventing the falsification of these cards, (1) a high coercive magnetic recording portion which is difficult to be altered is used for the data recording portion, (2) a hologram foil or seal which is difficult to be falsified is pasted on the card, (3) data is recorded on a special bar code printed by using a special ink which is not readily available, (4) a magnetic shield and the like have been carried out over a magnetic recording portion to prevent alteration, etc..

However, these conventional security countermeasures are presently not very much effective since the technique for falsification or alteration of the card is improved.

Recently, there has been proposed a new technique of judging the authenticity of the card, as described in WO 87/01845. In this prior art, analog inherent data peculiar to the card is recorded on the card as security data and digital code data corresponding to the security data is also recorded on the card. These two recorded data are reproduced and compared to each other. The authenticity of the card is determined based on the result of comparison. In order to record the analog peculiar data, fine stainless fiber chips are distributed and buried on the card at random. The chips may be distributed over the whole surface or only check area (stripe region) of the card. A microwave is applied on the check area, and the random pattern of the stainless fiber chips (analog security data peculiar to the card) is read. Then, the read analog security data is coded and the coded data is recorded in a digital recording section on the card. By determining whether or not the random pattern (analog data) read from the check area is coincide with the code data (digital data) read from the digital recording section, it is possible to judge the authenticity of the card. It is not possible to alter both of the random pattern analog security data and the digital code data. Therefore, the card can be determined as unauthentic if the random pattern analog security data differs from the digital code data.

However, the cost for practicing this technique is high since the conductive metal fibers are easily grouped due to static electricity and the processing technique for dispersing conductive metal fibers at random on a card is difficult to achieve. Further, a microwave of a gigahertz band used for reading the random pattern (analog security data) from the check area is hard to control, causing a large reading error. In detail, a microwave is applied to the random pattern of stainless fibers, and based on the transmission and reflection of the wave, data peculiar to the pattern is read. Furthermore, this technique entails other drawbacks such as an increase in size and complexity of the microwave reading device itself.

Under the above-described circumstances, there is proposed another technique in which the analog random pattern data is recorded on the card by using a magnetic material instead of the conductive metal fibers. There are three typical methods of forming such a magnetic random pattern as follows.

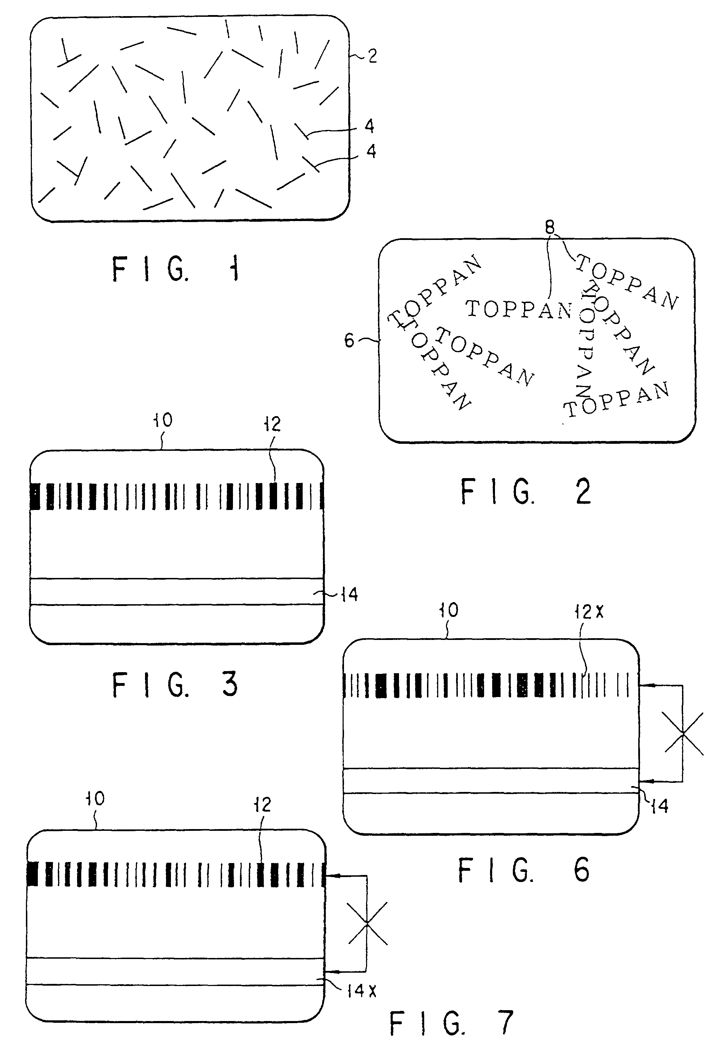

The first method is a technique in which magnetic metal fibers are dispersed or buried on the card. FIG. 1 is a diagram illustrating a cross section of an example of a data recording medium in connection with this method. As shown in FIG. 1, for example, magnetic metal fibers 4 are dispersed at random in a substrate 2.

The second method is a technique in which high-molecular fibers are filled with a magnetic material and are dispersed and buried on a substrate as high-molecular magnetic fibers.

EP-A-0 656 607 falls within the terms of Articles 54(3) EPC and discloses a technique similar to the second method.

The third method is a technique in which an irregular pattern made of magnetic ink is provided via printing, transfer, and typing (ink jet, electrostatic printing) or the like. FIG. 2 is a diagram illustrating a cross section of an example of a data recording medium in connection with this method. As shown in FIG. 2, for example, in the data recording medium used in this method, a string of characters, pattern, or mark is irregularly printed on a substrate 6 by means of a magnetic ink so that a random pattern 8 is printed on the substrate 6. It is to be noted that this random pattern 8 is covered to be unrecognized.

According to the three methods, the random pattern on the check area of the card is read and a corresponding digital code is recorded on the card. The authenticity of the card is judged by comparing the reproduced data of the random pattern and that of the digital code.

However, the above-described methods entail the following drawbacks.

In the case of the first method, the problem is not only the high cost of the magnetic metal fibers, but also its processability. When metal fibers are cut, the edge of the cutter may be damaged, or when these fibers are processed into a medium, barbs may be created and the surface is rough

In the case of the second method, its applicability is limited to a large lot type from the preparation of high-molecular magnetic fibers to the dispersion thereof, and when the method is applied to a small lot type, a high cost results as in the case of (1). Therefore, the second method is not suitable.

In the case of the third method, the production cost is relatively low; however, the magnetic patterns project even if it is covered, and therefore the patterns may be recognized easily from outside. Further, since the irregular patterns are artificially formed, the same pattern may be formed, lacking a randomness.

JP-A-60 96 294 discloses a magnetic card in which fibrous magnetic material is randomly arranged on a printing portion and data corresponding to the magnetic pattern peculiar to the printing portion are read from the printing portion and stored in a magnetic stripe. Authentication of the card is performed by reading the data on the magnetic stripe and comparing the data to the randomly arranged data read from the printing portion.

Accordingly, it is an object of the present invention to provide a data recording medium which can be produced at low cost, has a good processability, and a high security, and can be read by a relatively simple device at a high reading accuracy.

Another object of the present invention is to provide a method of judging the authenticity of such a novel data recording medium.

According to the invention there is provided a data recording medium according to the independent claims 1 and 9. Further in accordance with the invention there is provided a method for determining the authenticity of a data recording medium according to the independent claims 19 and 27.

Additional objects and advantages of the present invention will be set forth in the description which follows, and in part will be obvious from the description, or may be learned by practice of the present invention. The objects and advantages of the present invention may be realized and obtained by means of the instrumentalities and combinations particularly pointed out in the appended claims.

This invention can be more fully understood from the following detailed description when taken in conjunction with the accompanying drawings, in which:

The accompanying drawings, which are incorporated in and constitute a part of the specification, illustrate presently preferred embodiments of the present invention and, together with the general description given above and the detailed description of the preferred embodiments given below, serve to explain the principles of the present invention in which:
FIG. 1 is a diagram showing a cross section of an example of the conventional data recording medium;
FIG. 2 is a diagram showing a cross section of another example of the conventional data recording medium;
FIG. 3 is a diagram showing a first embodiment of the data recording medium according to the present invention;
FIG. 4 is a diagram showing an example of the process of the authenticity judgment according to the present invention;
FIG. 5 is a diagram showing another example of the process of the authenticity judgment according to the present invention;
FIG. 6 is a diagram showing an example in which an optical bar code of the data recording medium shown in FIG. 3 is falsified;
FIG. 7 is a diagram showing an example in which an optical bar code of the data recording medium shown in FIG. 3 is duplicated on other substrate;
FIG. 8 is a sectional diagram showing a second embodiment of the data recording medium according to the present invention;
FIG. 9 is a sectional diagram showing a third embodiment of the data recording medium according to the present invention;
FIG. 10 is a sectional diagram showing a fourth embodiment of the data recording medium according to the present invention;
FIG. 11 shows a correlation coefficient between registered data and read data;
FIG. 12 is a sectional diagram showing a fifth embodiment of the data recording medium according to the present invention;
FIG. 13 is a sectional diagram showing a sixth embodiment of the data recording medium according to the present invention;
FIG. 14 is a sectional diagram showing a seventh embodiment of the data recording medium according to the present invention;
FIG. 15 is a sectional diagram showing an eighth embodiment of the data recording medium according to the present invention; and
FIG. 16 shows a correlation coefficient between registered data and read data.

A preferred embodiment of a data recording medium according to the present invention will now be described with reference to the accompanying drawings.

FIG. 3 shows a first embodiment of the data recording medium according to the present invention. A magnetic data portion 14 for recording analog security data formed on an inherent random magnetic pattern peculiar to the card and a digital recording portion 12 (an optical bar code is illustrated in FIG. 3) for recording code data corresponding to the random pattern are formed on a card substrate 10. A digital magnetic recording portion, OCR (optical character recognition) printing portion, MICR (magnetic ink character recognition) printing portion, IC memory, or an optical memory can be used for the digital recording portion 12. Though the magnetic pattern of the magnetic data portion 14 cannot be seen, it is desirable to cover the magnetic data portion 14 in order to be unrecognized. A data recording portion other than the above portions 14 and 12 may be provided on the card in order to record card information, such as an ID number.

The magnetic data portion 14 magnetically stores analog security data formed of a random pattern peculiar to the card with being unrecognized. The random pattern is formed by distributing a magnetic material at random using a magnetic ink formed by non-uniformly dispersing magnetic particles in binder, which magnetic ink is applied to a stripe area of the card. With the magnetic particles non-uniformly dispersed in the binder, a magnetic irregularity is created in the magnetic data portion 14 obtained by applying the magnetic ink. The magnetic irregularity becomes analog magnetic data peculiar to the card.

The magnetic ink applying area is not limited to the stripe area but may be a whole surface of the card. The number of the stripe areas is not limited to one. It is possible to provide plural stripe areas for storing plural random pattern.

According to the present invention, a random magnetic pattern can be easily formed by merely coating or applying the magnetic ink having a magnetic irregularity uniformly on the card. Therefore, it is not necessary to intentionally form a magnetic random pattern as in the third conventional method. Further, the magnetic pattern does not project so that it cannot be recognized from outside.

The random pattern (security data) of the magnetic data portion 14 is read by detecting the presence/absence of the magnetic particles. The interval of a change in the presence/absence of the magnetic particles (corresponding to the magnetic irregularity) should preferably be of about 10 to 50µm. The resolution of a magnetic sensor for reading such analog magnetic data from the magnetic data portion 14 of a card, is generally about 20µm or more, and therefore it is more preferable that the magnetic irregularity should be of 20µm or more. In order to create a magnetic irregularity of 20µm or more, the magnetic particles used should have an average diameter of 2 µm or more. If the magnetic particles are smaller than 2µm, there is a tendency that a magnetic irregularity of 20µm or more is not easily formed. Further, the average diameter of the magnetic particles should be 40µm or less. If the average diameter of the magnetic particles exceeds 40µm, there is a tendency that projections are created in the coating layer and the mechanical characteristics of the medium, in terms of lamination of layers, conveyance, and slidability are deteriorated.

The shape of the magnetic particle will be described. The magnetic particle may be in a shape of a flake, needle, spherical, boat, or undefined shape. In particular, a flake-like type which is thin but wide in size is preferably used since the thickness of the magnetic data portion can be reduced.

In order to non-uniformly disperse the magnetic particles into the binder, for example, the following techniques are considered: (1) magnetic particles having a large particle size distribution should be used, (2) the dispersion is not carried out up to the level of the primary particles but intentionally loosely performed so as to leave flocculates of 10µ or more as they are in the case of magnetic particles having an average diameter of 10µm or less and a small particle size distribution, (3) magnetic particles of 10µm or more should be used.

The magnetic material may be any of various types of iron oxides, crystalline simple metals, crystalline alloys, amorphous alloys and the like.

The coercive force of the magnetic material varies depending upon generally a soft material (60 Oe or less), a semi-hard material (60 to 200 Oe), and a hard material (200 Oe or higher); however any coercive force can be used in the present invention.

When the soft material is used, the magnetic pattern is very hard to be identified due to a little residual magnetization. Further, it is not necessary to magnetize the material, and the magnetic pattern can be recognized in a low bias magnetic field.

In contrast, when the magnetic material has a coercive force of 60 Oe or higher, card information, such as an ID number which is to be recorded in the digital recording portion 12 in addition to the security analog pattern can be recorded in the magnetic data portion 14. Thus, the magnetic data portion 14 formed of magnetic material having a coercive force of 60 Oe or higher can be used as a card information recording portion as well as an analog security data recording portion.

When two or more types of magnetic particles having different coercive forces are mixed, such a mixture makes a special material, which can significantly improve its security. It is possible to fill other non-magnetic material into the magnetic ink.

The filling amount of the magnetic particles in the binder (magnetic ink) is arbitrary, and as long as an irregularity of the magnetic material is created, the filling density may be low or high.

The magnetic data portion 14 may be provided by any of the following methods, that is, a coating is directly applied or printed on the substrate 10 by use of magnetic ink, and after a functional medium, such as a transfer foil or seal, is processed, it is transferred to or pasted on the substrate. Thus, there can be provided a magnetic data portion 14 which can be prepared at relatively low cost and has an excellent processability, the magnetic irregularity of which cannot be easily recognized, achieving a high randomness.

As described above, the data in the magnetic data portion 14 is read by using a known magnetic sensor (a magnetic head or magnetoresistance sensor). When the hard material is used, the random pattern can be read by reading the irregularity of the residual magnetization after magnetizing. When the semi-hard or soft material is used, the random pattern can be read by reading the irregularity of the magnetic flux while applying an external bias magnetic field.

After the magnetic data portion 14 is formed on the card, the random pattern peculiar to the card (analog data) is read and A/D-converted into digital code data. The digital code data is recorded on the card by using the optical bar code 12.

If the recording medium of the present invention is applied to a money equivalent card, it is necessary to check its authenticity before transaction. The random pattern peculiar to the card is read from the magnetic data portion 14 and the read data is A/D-converted into digital code data. The A/D-converted digital code data is compared with digital data read from the optical bar code 12, thereby determining authenticity of the card.

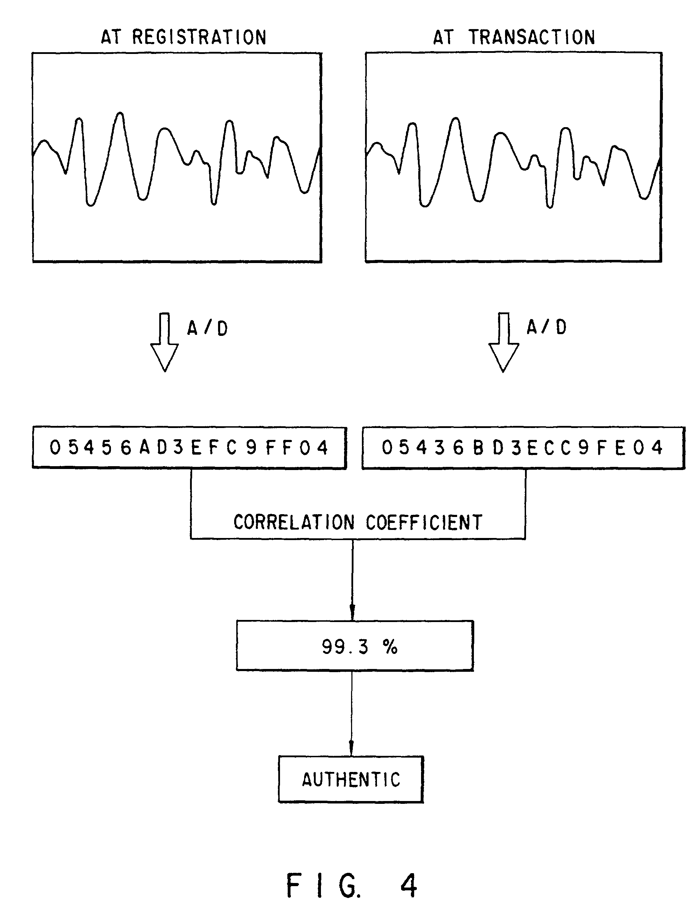

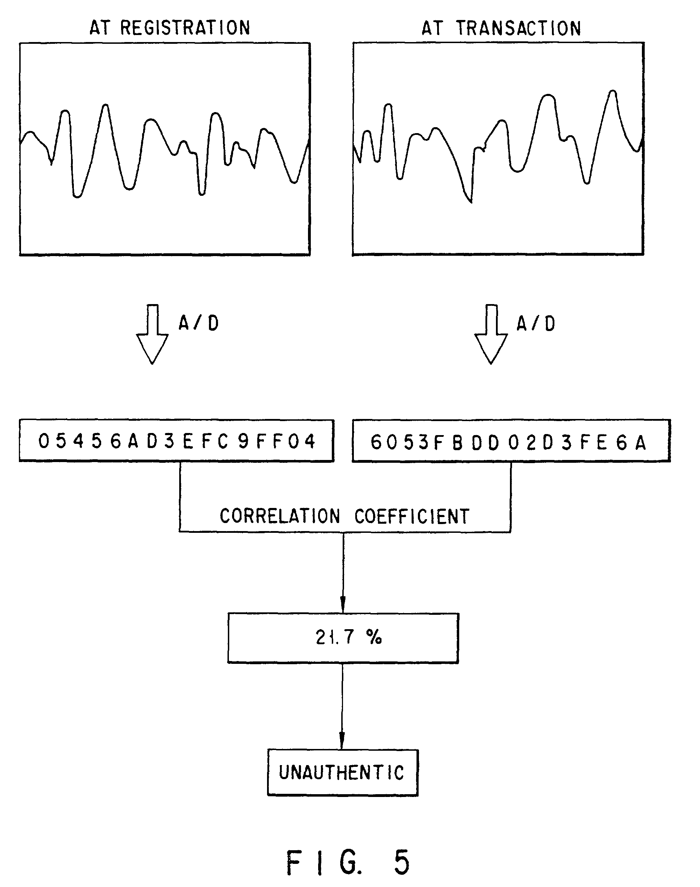

FIGS. 4 and 5 each show an example of the process of the authenticity judgment. FIG. 4 is a diagram showing the process in the case where a medium is judged to be authentic, whereas FIG. 5 is a diagram showing the process in the case where a medium is judged to be unauthentic. Read waveform of the random pattern at the time of registration and read waveform at the time of transaction are respectively converted into digital data of 8 bytes. The correlation coefficient between the two digital data is calculated and the card is judged to be authentic in the case where the value of the correlation coefficient is high, and the medium is judged to be unauthentic in the case where the value of the correlation coefficient is low.

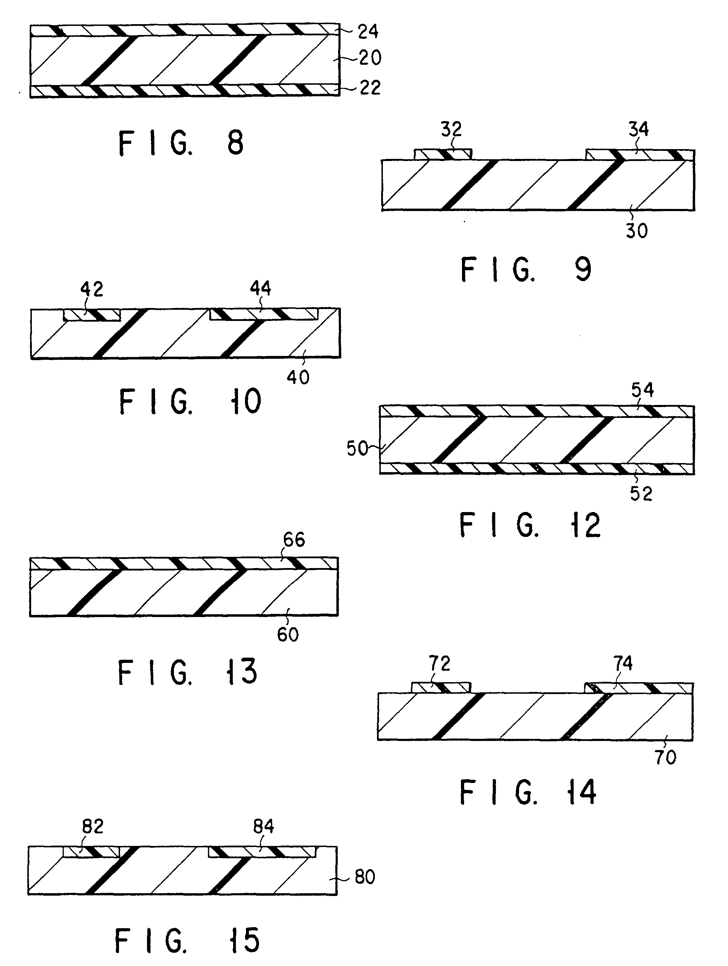

An example of falsification or alteration will be described. FIG. 6 is a diagram illustrating an example of a case in which the optical bar code of the card shown in FIG. 3 is falsified. In this case, the data of a falsified bar code 12x does not match the data of the magnetic data portion 14, and the transaction is inhibited. FIG. 7 is a diagram showing a case where the optical bar code 12 is duplicated on some other substrate 10x. In this case, the data of the duplicated optical bar code 12 does not match the data of the magnetic data portion 14x, and the transaction is inhibited.

As described, according to the present invention, inherent security data which is peculiar to the medium and cannot be easily copied or falsified is recorded in both the analog magnetic recording portion and the digital recording portion. Therefore, even if the data recorded on the magnetic recording portion or the digital data recording portion, such as an optical bar code, IC memory, or the optical memory is falsified, an unauthentic card can be easily found out by performing the comparison between the security data read from the analog magnetic recording portion and that from the digital recording portion.

Other embodiments of the data recording medium according to the present invention will be described. The same portions as those of the first embodiment will be indicated in the same reference numerals and their detailed description will be omitted.

FIG. 8 is a sectional diagram showing a second embodiment of the data recording medium according to the present invention. A PET (polyethylene terephthalate) card substrate 20 is used, and a digital data recording portion 22 is provided on one of the surface thereof and a security magnetic data portion 24 is provided on the other surface. The card substrate 20 is made of polyethylene terephthalate (trade name Toray E24) and is a white card having measurements of 5.4 X 8.6 cm and a thickness of about 188µm. The digital data recording portion 22 was prepared by applying a material in which barium ferrite (BaO-6Fe₂O₃) magnetic particles of 2750 Oe are dispersed in vinyl chloride vinyl acetate copolymer/urethane binder, on the substrate 20 in an application density of 30g/m² by gravure coating of the entire surface.

The security magnetic data portion 24 was prepared by the following manner. That is, Mn-Zn ferrite particles having an undefined shape, a particle size distribution of 2 to 20µm, and a coercive force of 30 Oe were dispersed in vinyl chloride vinyl acetate copolymer/urethane binder at a weight ratio of 7 : 1. Thus obtained mixture was applied on the substrate 20 in an application density of 30g/m² by gravure coating of the entire surface. The coating layer thus obtained was about 15µm.

FIG. 9 is a sectional diagram showing a merchandise coupon according to a third embodiment of the present invention. In this paper card, a paper-made card substrate 30 is used, and a security magnetic data portion 34 as well as a digital data recording portion 32 are provided on one of the surface thereof. As the card substrate 30, ticket raw paper was used. The card substrate 30 has measurements of 7.6 × 16.0 cm and a thickness of about 90µm. The digital data recording portion is formed on an optical bar code portion printed by using an ink-ribbon. The security magnetic data portion 34 was prepared by the following manner. That is, Ni particles having a flake-like shape, a thickness of 2µm, an average particle diameter of 20µm and a coercive force of 30 Oe were dispersed in ultraviolet hardening type acrylic binder at a weight ratio of 1 : 1. Thus obtained mixture was applied on the substrate 30 by offset-printing (twice printing) with a thickness of about 4µm.

FIG. 10 is a sectional diagram showing an IC card according to a fourth embodiment of the present invention. In this IC card, a card substrate 40 made of hard vinyl chloride was used, and a security magnetic data portion 44 and a digital data recording portion 42 were provided on one of the surface thereof. The card substrate 40 is a card having measurements of 5.4 × 8.6 cm and a thickness of about 0.76 mm. The digital data recording portion 42 was provided as an IC memory. The security magnetic data portion 44 was prepared by the following manner. That is, γ hematite γ-Fe₂O₃ having a needle shape, a longer axis of 2µm and a coercive force of 300 Oe and magnetite Fe₃O₄ having an undefined shape, a partial size distribution of 5 to 30 µm and a coercive force of 150 Oe were used at a weight ratio of 1 : 1, and thus obtained mixture were further dispersed in vinyl chloride-vinyl acetate copolymer/acryl binder at a weight ratio of 5 : 1. With use of thus obtained mixture, the security magnetic data portion 44 was printed partially on the substrate 40 via screen printing to have a thickness of about 4µm, and further flattened by a flat press.

With regard to the above second to fourth embodiments, the analog data of each security magnetic data portion was A/D-converted into digital data and the digital data was recorded in the digital data recording portion. After that, the comparison was performed with regard to the two data read from the security magnetic data portion and the digital data recording portion, and a good result was obtained in all of the embodiments.

The mutual behavior between the particle diameter of the magnetic particles and the correlation coefficient used in the present invention was examined in the following manner. Polyethylene terephthalate films having a thickness of 188µm were used as substrates, and two types of magnetic inks were applied on the substrates to have thicknesses of coatings of 10µm and 20µm by the gravure coating method, thus preparing two samples of each of two types, total of four sample cards. The inks used were as follows.
(1) Permalloy flake particle ink
   Magnetic material: permalloy flake particle (average diameter of 20µm, coercive force 30 Oe)
   Binder: vinyl chloride/vinyl acetate copolymer
   Weight ratio of magnetic material : binder = 5 : 1
(2) Magnetite ink
   Magnetic material: magnetite (average diameter of 0.5µm, coercive force 30 Oe)
   Binder: vinyl chloride/vinyl acetate copolymer
   Weight ratio of magnetic material : binder = 7 : 1

These samples were measured in terms of self correlation coefficient and mutual correlation coefficient. The obtained results are summarized in FIG. 11.

In FIG. 11, the registered data is digital data converted from analog security data read from the security magnetic data portion, and digitally recorded on a medium by some digital recording method. The readout data is data obtained by A/D converting data read out from the security magnetic data portion at the time of checking the authenticity of the card. The registered data and the readout data are compared with each other, and a card is judged to be authentic if the correlation (self correlation) coefficient is, for example, 90% or higher, whereas a card is judged to be unauthentic if the correlation coefficient is 90% or lower. In FIG. 11, the self correlation coefficients are listed on a diagonal from the upper left column to the lower right column and the mutual correlation coefficients are listed on other columns. The mutual correlation coefficients indicate the correlation between the registered data of one card and the readout data of another card.

As illustrated in FIG. 11, the card formed by use of permalloy flake particle having average diameter of 20µm has a high self correlation coefficient and a low mutual correlation coefficient, and therefore it can be easily distinguished from other cards and its authenticity can be easily judged. In contract, the card formed by use of magnetite having average diameter of 0.5µm has a low self correlation coefficient and a high mutual correlation coefficient, and therefore it cannot be easily distinguished from other cards and its authenticity cannot be easily judged.

Still other embodiments using a magnetic ink having the different composition of the above magnetic ink used in the first to fourth embodiments will be described. In the following embodiments, a magnetic ink containing magnetic particles, non-magnetic particles having an average diameter larger than that of the magnetic particles, and a binder. The magnetic particles, which have smaller diameters, can be dispersed relatively uniformly in the magnetic ink, whereas the non-magnetic particles, having larger diameters, are dispersed non-uniformly in the magnetic ink. Here, the non-magnetic particles having large diameters mean solely non-magnetic particles or a flocculate thereof. Due to the influence of the non-magnetic particles non-uniformly dispersed, a magnetic irregularity is created in the layer obtained by application of the magnetic ink. This magnetic irregularity serves as analog security pattern peculiar to the magnetic ink application layer.

In order to create a magnetic irregularity of 20µm as described above, the magnetic particles used should have an average diameter of 10µm or less and the non-magnetic particles should have an average diameter of 2µm or more. If the magnetic particles are larger than 10µm, there is a tendency toward that the uniform dispersion is not easily achieved, and if the non-magnetic particles are smaller than 2µm or less, there is a tendency that a magnetic irregularity of 20µm or more is not easily formed. Further, it is more preferable that the average diameter of the magnetic particles should be 0.5 to 10µm and the average diameter of the non-magnetic particles should be 2 to 40µm. If the average diameter of the magnetic particles is less than 0.5µm, there is a tendency that the particles are easily flocculated, making it difficult to achieve a uniform dispersion, and a low printing and coating aptitude and a low property as a magnetic coating film are exhibited. If the average diameter of the non-magnetic particles exceeds 40µm, there is a tendency that projections are created in the coating layer and the mechanical characteristics in terms of lamination of layers, conveyance of the medium, and slidability as a medium are deteriorated.

Further, the non-magnetic particles should preferably be larger than the magnetic particles by 10µm or more. If the difference is 10µm or more, a magnetic irregularity which is to be read by a sensor, can be easily formed. If the difference is less than 10µm, the uniformity of the magnetic particles is rendered low, and the magnetic irregularity cannot be easily formed.

The shape of the non-magnetic particle will be described. The non-magnetic particle may be in a shape of a flake, needle, spherical, boat, or undefined shape. In particular, a flake-like type which is thin but wide in size is preferably used since the thickness of the magnetic data portion can be reduced. In the case where a flake-like non-magnetic particle is used, it can be sufficiently used even if its average diameter is 40µm or more; however it is preferable that its thickness should not exceed the thickness of the coating layer.

In order to non-uniformly disperse the non-magnetic particles into the binder, for example, the following techniques are considered: (1) non-magnetic particles having a large particle size distribution should be used, (2) the dispersion is not carried out up to the level of the primary particles but intentionally loosely performed so as to leave flocculates of 10µ or more as they are in the case of non-magnetic particles having an average diameter of 10µm or less and a small particle size distribution, (3) non-magnetic particles of 10µm or more should be used.

The magnetic material may be any of various types of iron oxides, crystalline simple metals, crystalline alloys, amorphous alloys and the like.

The coercive force of the magnetic material varies depending upon generally a soft material (60 Oe or less), a semi-hard material (60 to 200 Oe), and a hard material (200 Oe or higher); however any coercive force can be used in the present invention.

When the soft material is used, the magnetic pattern is very hard to be identified due to a little residual magnetization. Further, it is not necessary to magnetize the material, and the magnetic pattern can be recognized in a low bias magnetic field.

In contrast, when the magnetic material has a coercive force of 60 Oe or higher, card information, such as an ID number which is to be recorded in the digital recording portion 12 in addition to the security analog pattern can be recorded in the magnetic data portion 14. Thus, the magnetic data portion 14 formed of magnetic material having a coercive force of 60 Oe or higher can be used as an analog security data recording portion as well as a card information recording portion.

When two or more types of magnetic particles having different coercive forces are mixed, such a mixture makes a special material, which can significantly improve its security. It is possible to fill other non-magnetic material into the magnetic ink.

The filling amount of the non-magnetic particles in the binder (magnetic ink) is arbitrary, and as long as an irregularity of the non-magnetic material is created, the filling density may be low or high.

FIG. 12 is a sectional diagram showing a PET (polyethylene terephthalate) card according to a fifth embodiment of the present invention. A PET card substrate 50 is used, and a digital data recording portion 52 is provided on one of the surface thereof and a security magnetic data portion 54 is provided on the other surface. The card substrate 50 is made of polyethylene terephthalate (trade name Toray E24) and is a white card having measurements of 5.4 × 8.6 cm and a thickness of about 188µm. The digital data recording portion 52 was prepared by applying a material in which barium ferrite (BaO-6Fe₂O₃) magnetic particles of 2750 Oe are dispersed in vinyl chloride vinyl acetate copolymer/urethane binder, on the substrate 50 in an application density of 30g/m² by gravure coating of the entire surface. The security magnetic data portion 54 was prepared by the following manner. That is, Ni particles (Novamet HCA-1 of INCO Co.) having a flake-like shape, a thickness of 1µm, an average diameter of 5µm and a coercive force of 50 Oe, and serving as magnetic particles, and Al particles (Toyo Aluminum) having a flake-like shape, a thickness of 0.5µm and an average diameter of 10µm, and serving as non-magnetic particles were used at a weight ratio of 5 : 1, and these particles were dispersed in vinyl chloride vinyl acetate copolymer/urethane binder at a weight ratio of 3 : 1. Thus obtained mixture was applied on the substrate 50 in an application density of 30g/m² by gravure coating of the entire surface. The coating layer thus obtained was about 15µm.

FIG. 13 is a diagram showing a cross section of a paper card according to a sixth embodiment of the present invention. A paper-made card substrate 60 is used, and a portion 66 serving as a security magnetic data portion as well as a digital data recording portion is provided on one of the surface thereof. As the card substrate 60, ticket raw paper (NIHON KAKOSEISHI) was used. The card substrate 50 is a white paper card having measurements of 5.4 × 8.6 cm and a thickness of about 180µm. The security magnetic data and digital data recording portion 66 was prepared by the following manner. That is, Co-γ -iron oxide (TODA KOGYO) having a needle-like shape, a long axis of 1µm and a coercive force of 650 Oe, and serving as magnetic particles, and magnesium silicate (NIHON TALC) having a flake-like shape, a thickness of 1µm and a particle size distribution of 1 to 20µm, and serving as non-magnetic particles were used at a weight ratio of 4 : 1, and these particles were dispersed in acryl/urethane binder at a weight ratio of 5 : 1. Thus obtained mixture was applied on the substrate 60 in an application density of 30g/m² by gravure coating of the entire surface. The coating layer thus obtained was about 15µm.

FIG. 14 is a diagram showing a cross section of a merchandise coupon according to a seventh embodiment of the present invention. A card substrate 70 made of OCR paper (SHIN OJI SEISHI) was used, and a security magnetic data portion 74 and a digital data recording portion 72 were provided on one of the surface thereof. The paper substrate 70 has measurements of 7.6 × 16.0 cm and a thickness of about 90µm. The digital data recording portion 72 was provided in the form of an optical bar code by ribbon-printing. The security magnetic data portion 74 was prepared by the following manner. That is, Mn-Zn ferrite particles having an undefined shape, an average diameter of 1.5µm and a coercive force of 30 Oe, and serving as magnetic particles, and Al particles (TOYO Aluminum) having a flake-like shape, a thickness of 0.5µm and an average diameter of 10µm, and serving as non-magnetic particles were used at a weight ratio of 10 : 1, and these particles were dispersed in a UV-hardening acryl binder at a weight ratio of 1 : 1. With use of thus obtained mixture, the security magnetic data portion 74 was printed partially on the substrate 70 via two times of offset printing partial printing to have a thickness of about 4µm.

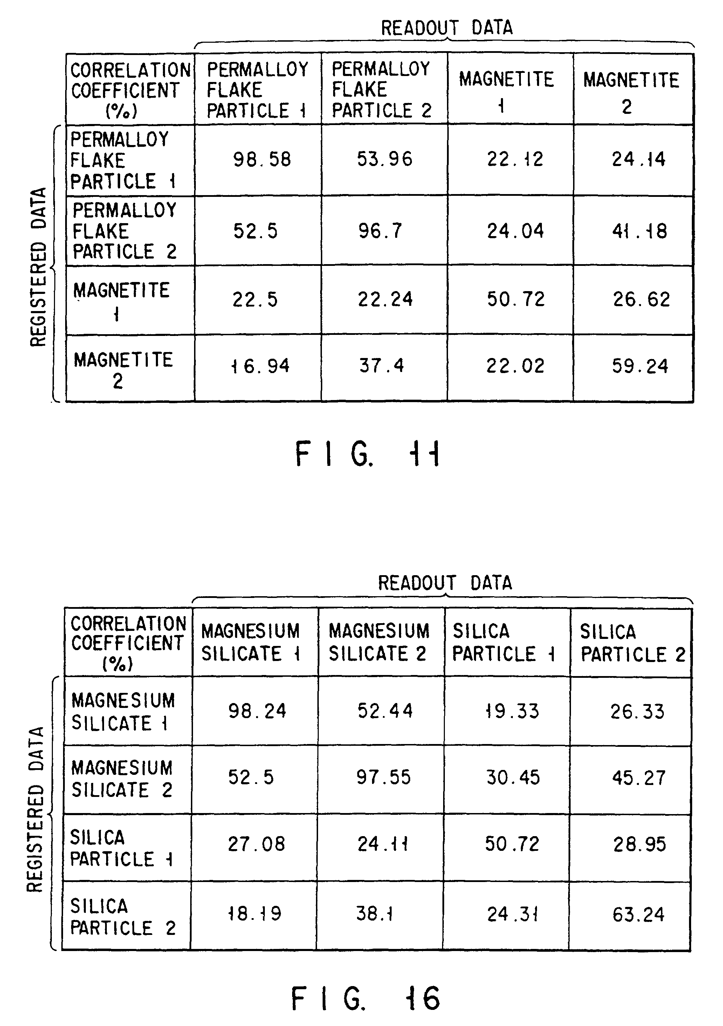

FIG. 15 is a diagram showing a cross section of an IC card according to an eighth embodiment of the present invention. A card substrate 80 made of hard vinyl chloride was used, and a security magnetic data portion 84 and a digital data recording portion 82 were provided on one of the surface thereof. The card substrate 80 has measurements of 5.4 × 8.5 cm and a thickness of about 0.76 mm. The digital data recording portion 82 was provided as an IC memory. The security magnetic data portion 84 was prepared by the following manner. That is, magnetite particles having a spherical shape, an average diameter of 0.5µm and a coercive force of 50 Oe, and serving as magnetic particles, and acryl bead particles having a tabular shape and a particle size distribution of 10 to 30µm, and serving as non-magnetic particles were used at a weight ratio of 7 : 1, and these particles were dispersed in vinyl chloride vinyl acetate copolymer/acryl binder at a weight ratio of 5 : 1. With use of thus obtained mixture, the security magnetic data portion was printed partially on the substrate 80 via screen printing to have a thickness of about 4µm, and further flattened by a flat press.

With regard to the above fifth to eighth embodiments, the analog data of each security magnetic data portion was A/D-converted into digital data and the digital data was recorded in the digital data recording portion. After that, the comparison was performed with regard to the two data read from the security magnetic data portion and the digital data recording portion, and a good result was obtained in all of the embodiments.

The mutual behavior between the particle diameter of the magnetic particles and the correlation coefficient used in the present invention was examined in the following manner. Polyethylene terephthalate films having a thickness of 188µm were used as substrates, and magnetic inks prepared by dispersing two types of non-magnetic materials were applied on the substrates to have thicknesses of coatings of 10µm and 20µm by the gravure coating method, thus preparing two samples of each of two types, total of four sample cards. The inks used were as follows.
(1) Magnesium silicate particle dispersion ink
   Magnetic material: magnetite (average diameter of 0.5µm, coercive force 30 Oe)
   Non-magnetic material: magnesium silicate (average diameter of 20µm)
   Binder: vinyl chloride/vinyl acetate copolymer
   Weight ratio between magnetic material : non-magnetic material = 4 : 1
   Weight ratio between pigment component : binder = 6 : 1
(2) Silica particle dispersion ink
   Magnetic material: magnetite (average diameter of 0.5µm, coercive force 30 Oe)
   Non-magnetic material: silica (average diameter of 0.2µm)
   Binder: vinyl chloride/vinyl acetate copolymer
   Weight ratio between magnetic material : non-magnetic material = 4 : 1
   Weight ratio between pigment component : binder = 6 : 1

These samples were measured in terms of self correlation coefficient and mutual correlation coefficient. The obtained results are summarized in FIG. 16.

In FIG. 16, magnesium silicate 1 represents a sample formed by applying the magnesium silicate particle dispersion ink (1) with a thickness of 10 µm, magnesium silicate 2 represents a sample formed by applying the magnesium silicate particle dispersion ink (1) with a thickness of 20 µm, silica particle 1 represents a sample formed by applying the silica particle dispersion ink (2) with a thickness of 10 µm, and silica particle 2 represents a sample formed by applying the silica particle dispersion ink (2) with a thickness of 20 µm.

In FIG. 16, the registered data is digital data converted from analog security data read from the security magnetic data portion, and digitally recorded on a medium by some digital recording method. The readout data is data obtained by A/D converting data read out from the security magnetic data portion at the time of checking the authenticity of the card. The registered data and the readout data are compared with each other, and a card is judged to be authentic if the correlation (self correlation) coefficient is, for example, 90% or higher, whereas a card is judged to be unauthentic if the correlation coefficient is 90% or lower. In FIG. 16, the self correlation coefficients are listed on a diagonal from the upper left column to the lower right column and the mutual correlation coefficients are listed on other columns. The mutual correlation coefficients indicate the correlation between the registered data of one card and the readout data of another card.

As illustrated in FIG. 16, the security magnetic data portion made of the ink in which the non-magnetic particles are larger than the magnetic particles, has a high self correlation coefficient and a low mutual correlation coefficient, and therefore it can be easily distinguished from other cards and its authenticity can be easily judged.

Additional advantages and modifications will readily occur to those skilled in the art. Therefore, the present invention in its broader aspects is not limited to the specific details, representative devices, and illustrated examples shown and described herein. Accordingly, various modifications may be made without departing from the scope of the general inventive concept as defined by the appended claims. For example, the shape of the medium and the application of the medium can be freely changed or modified.

According to the present invention, the data recording medium in which a magnetic irregularity is intentionally provided, differs from the conventional medium in which lengthy magnetic fibers are dispersed, or an irregular pattern is printed, and the present invention is advantageous in the following respects.

First, the present invention can deal with a small-lot production, and is advantageous in terms of cost.

Second, since the pattern is formed of the magnetic irregularity, the security random pattern data cannot be easily seen through, and a high security can be achieved.

Third, a high randomness can be obtained as compared to the method by irregularly printing a magnetic pattern.

Fourth, as compared to the conventional method in which magnetic fibers are dispersed, the magnetic ink contains a large binder component; therefore the invention can be easily processed by, for example, cutting or rapping.

Fifth, the security data can be read by a relatively simple device, and the reading accuracy is high.

## Claims

1. A data recording medium comprising:
a substrate (**10, 20, 30, 40**);
an analog data storing portion (**14, 24, 34, 44**), provided on said substrate, for magnetically storing analog data which is peculiar to the data recording medium; and
a digital data storing portion (**12, 22, 32, 42**), provided on said substrate, for storing digital data corresponding to the analog data read from said analog data storing portion,
wherein
said analog data storing portion is a layer of magnetic ink which is comprised of a binder and magnetic particles which magnetic particles are non-uniformly dispersed into the binder and which magnetic particles have a dimension of 2 µm or more and 40 µm or less, and wherein said analog data storing portion stores the analog data based on the non-uniform pattern of the magnetic particles.

2. The medium according to claim 1, wherein said magnetic particles have a coercive force of 60 Oe or less.

3. The medium according to claim 1, wherein said magnetic particles have a flake shape.

4. The medium according to claim 1, wherein said analog data storing portion comprises a seal pasted on said substrate, the seal comprising said layer of magnetic ink which is comprised of said binder and said magnetic particles non-uniformly dispersed into the binder.

5. The medium according to claim 1, wherein said analog data storing portion comprises foil transferred to said substrate, the foil comprising said layer of magnetic ink which is comprised of said binder and said magnetic particles non-uniformly dispersed into the binder.

6. The medium according to claim 1, wherein said digital data storing portion comprises a bar code (12,32).

7. The medium according to claim 1, wherein said digital data storing portion comprises an IC memory (42).

8. The medium according to claim 1, wherein said magnetic ink comprises a permalloy flake particle ink having an average diameter of 20 µm and a coercive force of 30 0e.

9. A data recording medium comprising:
a substrate (**50, 60, 70, 80**);
an analog data storing portion (**54, 66, 74, 84**), provided on said substrate, for magnetically storing analog data which is peculiar to the data recording medium; and
a digital data storing portion (**52, 66, 72, 82**), provided on said substrate, for storing digital data corresponding to the analog data read from said analog data storing portion,
wherein
said analog data storing portion is a layer of magnetic ink which is comprised of a binder, non-magnetic particles which non-magnetic particles are non-uniformly dispersed into the binder and which non-magnetic particles have a dimension of 2 µm or more, and magnetic particles smaller than the non-magnetic particles, and wherein said anolog data storing portion stores the analog data based on the non-uniform pattern of the non-magnetic particles.

10. The medium according to claim 9, wherein said magnetic particles have a diameter of 10 µm or less.

11. The medium according to claim 9, wherein said magnetic particles have a coercive force of 60 Oe or less.

12. The medium according to claim 9, wherein said non-magnetic particles have a flake shape.

13. The medium according to claim 9, wherein said analog data storing portion comprises a seal pasted on said substrate, the seal comprising said layer of magnetic ink which is comprised of said binder, said non-magnetic particles non-uniformly dispersed into the binder, and said magnetic particles smaller than the non-magnetic particles.

14. The medium according to claim 9, wherein said analog data storing portion comprises a foil transferred to said substrate, the foil comprising said layer of magnetic ink which is comprised of said binder, said non-magnetic particles non-uniformly dispersed into the binder, and said magnetic particles smaller than the non-magnetic particles.

15. The medium according to claim 9, wherein said digital data storing portion comprises a bar code (72).

16. The medium according to claim 9, wherein said digital data storing portion comprises an IC memory (82).

17. The medium according to claim 9, wherein said digital data storing portion is formed of a part of said analog data storing portion (66).

18. The medium according to claim 9, wherein said magnetic ink comprises magnetite particles having an average diameter of 0.5 µm and a coercive force 30 Oe and magnesium silicate particles having an average diameter of 20 µm.

19. A method for determining the authenticity of a data recording medium, comprising the steps of:
forming on the data recording medium an analog data storing portion (14,24,34,44) which is a layer of magnetic ink which is comprised of a binder and magnetic particles which magnetic particles are non-uniformly dispersed into the binder and which magnetic particles have a dimension of 2 µm or more and 40 µm or less, the analog data storing portion storing analog data which is based on the non-uniform pattern of the magnetic particles and is peculiar to the data recording medium;
reading the analog data from the analog data storing portion;
forming on the data recording medium a digital data storing portion (12,22,32,42) which stores digital data corresponding to the analog data read from said analog data storing portion;
reading the digital data from the digital data storing portion; and
comparing the two read data with each other, whereby determining the authenticity of the data recording medium when the read data coincide with each other.

20. The method according to claim 19, wherein said magnetic particles have a coercive force of 60 Oe or less.

21. The method according to claim 19, wherein said magnetic particles have a flake shape.

22. The method according to claim 19, wherein said analog data storing portion forming step comprises a substep of pasting a seal on the data recording medium, the seal comprising said layer of magnetic ink which is comprised of said binder and said magnetic particles non-uniformly dispersed into the binder.

23. The method according to claim 19, wherein said analog data storing portion forming step comprises a substep of transferring a foil to the data recording medium, the foil comprising said layer of magnetic ink which is comprised of said binder and said magnetic particles non-uniformly dispersed into the binder.

24. The method according to claim 19, wherein said digital data storing portion forming step comprises a substep of printing a bar code (12,32) denoting the digital data on the data recording medium.

25. The method according to claim 19, wherein said digital data storing portion forming step comprises a substep of writing the digital data into an IC memory (42) provided in the data recording medium.

26. The method according to claim 19, wherein said magnetic particles comprise permalloy flake particles having an average diameter of 20 µm and a coercive force of 30 Oe.

27. A method for determining the authenticity of a data recording medium, comprising the steps of:
forming on the data recording medium an analog data storing portion (54,66,74,84) which is a layer of magnetic ink which is comprised of a binder, nonmagnetic particles which nonmagnetic particles are non-uniformly dispersed into the binder and which nonmagnetic particles have a dimension of 2 µm or more, and magnetic particles smaller than the nonmagnetic particles, the analog data storing portion storing analog data which is based on the non-uniform pattern of the nonmagnetic particles and is peculiar to the data recording medium;
reading the analog data from the analog data storing portion;
forming on the data recording medium a digital data storing portion (52,66,72,82) which stores digital data corresponding to the analog data read from said analog data storing portion;
reading the digital data from the digital data storing portion; and
comparing the two read data with each other, whereby determining the authenticity of the data recording medium when the read data coincide with each other.

28. The method according to claim 27, wherein said non-magnetic particles have a diameter of 2 µm or more.

29. The method according to claim 27, wherein said magnetic particles have a diameter of 10 µm or less.

30. The method according to claim 27, wherein said magnetic particles have a coercive force of 60 Oe or less.

31. The method according to claim 27, wherein said non-magnetic particles have a flake shape.

32. The method according to claim 27, wherein said analog data storing portion forming step comprises a substep of pasting a seal on the data recording medium, the seal comprising said layer of magnetic ink which is comprised of said binder, said non-magnetic particles non-uniformly dispersed into the binder, and said magnetic particles smaller than the non-magnetic particles.

33. The method according to claim 27, wherein said analog data storing portion forming step comprises a substep of transferring a foil to the data recording medium, the foil comprising said layer of magnetic ink which is comprised of said binder, said non-magnetic particles non-uniformly dispersed into the binder, and said magnetic particles smaller than the non-magnetic particles.

34. The method according to claim 27, wherein said digital data storing portion forming step comprises a substep of printing a bar code (72) denoting the digital data on the data recording medium.

35. The method according to claim 27, said digital data storing portion forming step comprises a substep of writing the digital data into an IC memory (82) provided in the data recording medium.

36. The method according to claim 27, wherein said magnetic ink comprises magnetite particles having an average diameter of 0.5 µm and a coercive force 30 Oe and magnesium silicate particles having an average diameter of 20 µm.

## Patentansprüche

1. Medium zum Datenaufzeichnen, mit:
einem Substrat (10, 20, 30, 40);
einem auf dem Substrat vorgesehenen Analogdatenspeicherabschnitt (14, 24, 34, 44) zum magnetischen Speichern analoger Daten, die dem Medium zum Datenaufzeichnen charakteristisch sind; und mit
einem auf dem Substrat vorgesehenen Digitaldatenspeicherabschnitt (12, 22, 32, 42) zum Speichern digitaler Daten entsprechend den aus dem Analogspeicherabschnitt gelesenen analogen Daten, wobei
der Analogdatenspeicherabschnitt eine Schicht magnetischer Tinte ist, die sich zusammensetzt aus einem Bindemittel und magnetischen Partikeln, wobei die magnetischen Partikel ungleichförmig im Bindemittel verteilt sind und eine Größe von 2 µm oder mehr und 40 µm oder weniger haben, und wobei der Analogdatenspeicherabschnitt die analogen Daten auf der Grundlage des ungleichförmigen Musters der magnetischen Partikel speichert.

2. Medium nach Anspruch 1, dessen magnetische Partikel eine Koerzitivkraft von 60 Oe oder weniger haben.

3. Medium nach Anspruch 1, dessen magnetische Partikel eine schuppenförmige Gestalt haben.

4. Medium nach Anspruch 1, dessen Analogdatenspeicherabschnitt über einen auf das Substrat geklebten Verschluß verfügt, der ausgerüstet ist mit der Schicht magnetischer Tinte, die das Bindemittel und die ungleichförmig im Binder verteilten magnetischen Partikel enthält.

5. Medium nach Anspruch 1, bei dem der Datenspeicherabschnitt eine auf das Substrat übertragene Folie enthält, die ausgerüstet ist mit der Schicht magnetischer Tinte, die das Bindemittel und die ungleichförmig im Binder verteilten magnetischen Partikel enthält.

6. Medium nach Anspruch 1, deren Digitaldatenspeicherabschnitt einen Balkencode (12, 32) enthält.

7. Medium nach Anspruch 1, deren Digitaldatenspeicherabschnitt einen IC-Speicher (42) enthält.

8. Medium nach Anspruch 1, bei dem die magnetische Tinte eine Permalloyschuppenpartikeltinte mit einem durchschnittlichen Durchmesser von 20 µm und einer Koerzitivkraft von 30 Oe ist.

9. Medium zum Datenaufzeichnen, mit:
einem Substrat (50, 60, 70, 80); einem auf dem Substrat (54, 66, 74, 84) vorgesehenen Analogdatenspeicherabschnitt zum magnetischen Speichern analoger Daten, die dem Medium zum Datenaufzeichnen charakteristisch sind; und mit
einem auf dem Substrat vorgesehenen Digitaldatenspeicherabschnitt (52, 66, 72, 82) zum Speichern digitaler Daten entsprechend den aus dem Analogspeicherabschnitt gelesenen analogen Daten, wobei
der Analogdatenspeicherabschnitt eine Schicht magnetischer Tinte ist, die zusammengesetzt ist aus einem Bindemittel, ungleichförmig im Bindemittel verteilten nichtmagnetischen Partikeln mit einer Größe von 2 µm oder mehr, und aus magnetischen Partikeln, die kleiner sind als die nichtmagnetischen Partikel, wobei der Analogdatenspeicherabschnitt die analogen Daten auf der Grundlage des ungleichförmigen Musters der nichtmagnetischen Partikel speichert.

10. Medium nach Anspruch 9, dessen magnetische Partikel einen Durchmesser von 10 µm oder weniger haben.

11. Medium nach Anspruch 9, dessen magnetische Partikel eine Koerzitivkraft von 60 Oe oder weniger haben.

12. Medium nach Anspruch 9, dessen nichtmagnetische Partikel eine schuppenförmige Gestalt haben.

13. Medium nach Anspruch 9, dessen Analogdatenspeicherabschnitt über einen auf das Substrat geklebten Verschluß verfügt, der die Schicht magnetischer Tinte trägt, die sich zusammensetzt aus dem Bindemittel, den ungleichförmig im Bindemittel verteilten nichtmagnetischen Partikeln und den magnetischen Partikeln, die kleiner sind als die nichtmagnetischen Partikel.

14. Medium nach Anspruch 9, dessen Analogdatenspeicherabschnitt über eine auf das Substrat übertragene Folie verfügt, die über eine Schicht magnetischer Tinte verfügt, die sich zusammensetzt aus dem Bindemittel, den ungleichförmig im Bindemittel verteilten nichtmagnetischen Partikeln und den magnetischen Partikeln, die kleiner sind als die nichtmagnetischen Partikel.

15. Medium nach Anspruch 9, dessen Digitaldatenspeicherabschnitt einen Balkencode (72) enthält.

16. Medium nach Anspruch 9, dessen Digitaldatenspeicherabschnitt einen IC-Speicher (82) enthält.

17. Medium nach Anspruch 9, dessen Digitaldatenspeicherabschnitt aus einem Teil des Analogdatenspeicherabschnitts (66) gebildet ist.

18. Medium nach Anspruch 9, dessen magnetische Tinte über Magnetitpartikel mit einem durchschnittlichen Durchmesser von 0,5 µm und eine Koerzitivkraft von 30 Oe und über Magnesiumsilikatpartikel mit einem durchschnittlichen Durchmesser von 20 µm verfügt.

19. Verfahren zum Bestimmen der Authentizität eines Mediums zum Datenaufzeichnen, mit den Verfahrensschritten:
Bilden auf dem Medium zum Datenaufzeichnen eines Analogdatenspeicherabschnitts (14, 24, 34, 44), der eine Schicht magnetischer Tinte ist, die ein Bindemittel und magnetische Partikel enthält, wobei die magnetischen Partikel ungleichförmig im Bindemittel verteilt sind und eine Größe von 2 µm oder mehr und 40 µm oder weniger haben, wobei der Analogdatenspeicherabschnitt analoge Daten speichert, die auf dem ungleichförmigen Muster der magnetischen Partikel basieren und dem Medium zum Datenaufzeichnen charakteristisch sind;
Lesen der analogen Daten aus dem Analogdatenspeicherabschnitt;
Bilden eines Digitaldatenspeicherabschnitts (12, 22, 32, 42) auf dem Medium zum Datenaufzeichnen, der digitale Daten gemäß den aus dem Analogdatenspeicherabschnitt gelesenen analogen Daten speichert;
Lesen der digitalen Daten aus dem Digitaldatenspeicherabschnitt; und
Vergleichen der beiden gelesenen Daten miteinander, wodurch bei miteinander übereinstimmenden gelesenen Daten die Authentizität des Mediums zum Datenaufzeichnen bestimmt ist.

20. Verfahren nach Anspruch 19, bei dem die magnetischen Partikel eine Koerzitivkraft von 60 Oe oder weniger haben.

21. Verfahren nach Anspruch 19, bei dem die magnetischen Partikel eine schuppenförmige Gestalt haben.

22. Verfahren nach Anspruch 19, bei dem der Verfahrensschritt zum Bilden des Analogdatenspeicherabschnitts einen Unterschritt des Klebens eines Verschlusses auf das Medium zum Datenaufzeichnen umfaßt, wobei der Verschluß die Schicht magnetischer Tinte enthält, die das Bindemittel und die ungleichförmig im Bindemittel verteilten magnetischen Partikel enthält.

23. Verfahren nach Anspruch 19, bei dem der Verfahrensschritt zum Bilden des Analogdatenspeicherabschnitts einen Unterschritt des Übertragens einer Folie auf das Medium zum Datenaufzeichnen umfaßt, wobei die Folie die Schicht magnetischer Tinte enthält, die das Bindemittel und die ungleichförmig im Bindemittel verteilten magnetischen Partikel enthält.

24. Verfahren nach Anspruch 19, bei dem der Verfahrensschritt zum Bilden des Digitaldatenspeicherabschnitts einen Unterschritt des Druckens eines Balkencodes (12, 32) enthält, der die digitalen Daten auf dem Medium zum Datenaufzeichnen benennt.

25. Verfahren nach Anspruch 19, bei dem der Verfahrensschritt zum Bilden des Digitaldatenspeicherabschnitts einen Unterschritt des Schreibens der digitalen Daten in einen im Medium zum Datenaufzeichnen vorgesehenen IC-Speicher (42) umfaßt.

26. Verfahren nach Anspruch 19, bei dem die magnetischen Partikel Permallyschuppenpartikel enthalten, die einen durchschnittlichen Durchmesser von 20 µm und eine Koerzitivkraft von 30 Oe haben.

27. Verfahren zum Bestimmen der Authentizität eines Mediums zum Datenaufzeichnen, mit den Verfahrensschritten:
Bilden eines Analogdatenspeicherabschnitts (54, 66, 74, 84) auf dem Medium zum Datenaufzeichnen, der eine Schicht magnetischer Tinte ist, die zusammengesetzt ist aus einem Bindemittel, nichtmagnetischen Partikeln, wobei die nichtmagnetischen Partikel ungleichförmig im Bindemittel verteilt sind und wobei nichtmagnetische Partikel eine Größe von 2 µm haben und wobei magnetische Partikel kleiner als die nichtmagnetischen Partikel sind, wobei der Analogdatenspeicherabschnitt analoge Daten speichert, die auf dem ungleichförmigen Muster der nichtmagnetischen Partikel basieren und dem Medium zum Datenaufzeichnen charakteristisch sind;
Lesen der analogen Daten aus dem Analogdatenspeicherabschnitt;
Bilden eines Digitaldatenspeicherabschnitts (52, 66, 72, 82) auf dem Medium zum Datenaufzeichnen, der digitale Daten gemäß den aus dem Analogdatenspeicherabschnitt gelesenen analogen Daten speichert;
Lesen der digitalen Daten aus dem Digitaldatenspeicherabschnitt; und
Vergleichen der beiden gelesenen Daten miteinander, wodurch bei miteinander übereinstimmenden gelesenen Daten die Authentizität des Mediums zum Datenaufzeichnen bestimmt ist.

28. Verfahren nach Anspruch 27, bei dem die nichtmagnetischen Partikel einen Durchmesser von 2 µm oder mehr haben.

29. Verfahren nach Anspruch 27, bei dem die magnetischen Partikel einen Durchmesser von 10 µm oder weniger haben.

30. Verfahren nach Anspruch 27, bei dem die magnetischen Partikel eine Koerzitivkraft von 60 Oe oder weniger haben.

31. Verfahren nach Anspruch 27, bei dem die nichtmagnetischen Partikel eine schuppenförmige Gestalt haben.

32. Verfahren nach Anspruch 27, bei dem der Verfahrensschritt zum Bilden des Analogdatenspeicherabschnitts einen Unterschritt des Klebens eines Verschlusses auf das Medium zum Datenaufzeichnen umfaßt, wobei der Verschluß die Schicht magnetischer Tinte enthält, die zusammengesetzt ist aus dem Bindemittel und den ungleichförmig im Bindemittel verteilten nichtmagnetischen Partikeln, wobei die magnetischen Partikel kleiner als die nichtmagnetischen Partikel sind.

33. Verfahren nach Anspruch 27, bei dem der Verfahrensschritt zum Bilden des Analogdatenspeicherabschnitts einen Unterschritt des Übertragens einer Folie auf das Medium zum Datenaufzeichnen umfaßt, wobei die Folie die Schicht magnetischer Tinte enthält, die zusammengesetzt ist aus dem Bindemittel und den ungleichförmig im Bindemittel verteilten nichtmagnetischen Partikeln, wobei die magnetischen Partikel kleiner als die nichtmagnetischen Partikel sind.

34. Verfahren nach Anspruch 27, bei dem der Verfahrensschritt zum Bilden des Digitaldatenspeicherabschnitts einen Unterschritt des Druckens eines Balkencodes (72) enthält, der die digitalen Daten auf dem Medium zum Datenaufzeichnen benennt.

35. Verfahren nach Anspruch 27, bei dem der Verfahrensschritt zum Bilden des Digitaldatenspeicherabschnitts einen Unterschritt des Schreibens der digitalen Daten in einen im Medium zum Datenaufzeichnen vorgesehenen IC-Speicher (82) umfaßt.

36. Verfahren nach Anspruch 27, bei dem die magnetische Tinte Magnetitpartikel mit einem durchschnittlichen Durchmesser von 0,5 µm und einer Koerzitivkraft von 30 Oe sowie Magnesiumsilikatpartikel mit einem durchschnittlichen Durchmesser von 20 µm enthält.

## Revendications

1. Support d'enregistrement de données, comprenant :
un substrat (10, 20, 30, 40) ;
une partie de stockage de données analogiques (14, 24, 34, 44), proposée sur ledit substrat, pour stocker de façon magnétique des données analogiques qui sont spécifiques au support d'enregistrement de données ; et
une partie de stockage de données numériques (12, 22, 32, 42), proposée sur ledit substrat, pour stocker des données numériques correspondant aux données analogiques lues à partir de ladite partie de stockage de données analogiques,
dans lequel ladite partie de stockage de données analogiques est une couche d'encre magnétique qui se compose d'un liant et de particules magnétiques, ces particules magnétiques étant dispersées de façon non uniforme dans le liant et ces particules magnétiques ayant une dimension de 2 µm ou plus et de 40 µm ou moins, et dans lequel ladite partie de stockage de données analogiques stocke les données analogiques sur la base du motif non uniforme des particules magnétiques.

2. Support selon la revendication 1, dans lequel lesdites particules magnétiques ont une force coercitive de 60 Oe ou moins.

3. Support selon la revendication 1, dans lequel lesdites particules magnétiques ont une forme de paillette.

4. Support selon la revendication 1, dans lequel ladite partie de stockage de données analogiques comprend une soudure collée sur ledit substrat, la soudure comprenant ladite couche d'encre magnétique qui se compose dudit liant et desdites particules magnétiques dispersées de façon non uniforme dans le liant.

5. Support selon la revendication 1, dans lequel ladite partie de stockage de données analogiques comprend une feuille métallique transférée sur ledit substrat, la feuille métallique comprenant ladite couche d'encre magnétique qui se compose dudit liant et desdites particules magnétiques dispersées de façon non uniforme dans le liant.

6. Support selon la revendication 1, dans lequel ladite partie de stockage de données numériques comprend un code à barres (12, 32).

7. Support selon la revendication 1, dans lequel ladite partie de stockage de données numériques comprend une mémoire de CI (47).

8. Support selon la revendication 1, dans lequel ladite encre magnétique comprend une encre à particules de paillette de permalloy ayant un diamètre moyen de 20 µm et une force coercitive de 30 Oe.

9. Support d'enregistrement de données, comprenant :
un substrat (50, 60, 70, 80) ;
une partie de stockage de données analogiques (54, 66, 74, 84), proposée sur ledit substrat, pour stocker de façon magnétique des données analogiques qui sont spécifiques au support d'enregistrement de données ; et
une partie de stockage de données numériques (52, 66, 72, 82), proposée sur ledit substrat, pour stocker des données numériques correspondant aux données analogiques lues à partir de ladite partie de stockage de données analogiques,
dans lequel ladite partie de stockage de données analogiques est une couche d'encre magnétique qui se compose d'un liant, de particules non magnétiques, ces particules non magnétiques étant dispersées de façon non uniforme dans le liant et ces particules non magnétiques ayant une dimension de 2 µm ou plus, et de particules magnétiques plus petites que les particules non magnétiques, dans lequel ladite partie de stockage de données analogiques stocke les données analogiques sur la base du motif non uniforme des particules non magnétiques.

10. Support selon la revendication 9, dans lequel lesdites particules magnétiques ont un diamètre de 10 µm ou moins.

11. Support selon la revendication 9, dans lequel lesdites particules magnétiques ont une force coercitive de 60 Oe ou moins.

12. Support selon la revendication 9, dans lequel lesdites particules non magnétiques ont une forme de paillette.

13. Support selon la revendication 9, dans lequel ladite partie de stockage de données analogiques comprend une soudure collée sur ledit substrat, la soudure comprenant ladite couche d'encre magnétique qui se compose dudit liant, desdites particules non magnétiques dispersées de façon non uniforme dans le liant, et desdites particules magnétiques plus petites que les particules non magnétiques.

14. Support selon la revendication 9, dans lequel ladite partie de stockage de données analogiques comprend une feuille métallique transférée sur ledit substrat, la feuille métallique comprenant ladite couche d'encre magnétique qui se compose dudit liant, desdites particules non magnétiques dispersées de façon non uniforme dans le liant, et desdites particules magnétiques plus petites que les particules non magnétiques.

15. Support selon la revendication 9, dans lequel ladite partie de stockage de données numériques comprend un code à barres (72).

16. Support selon la revendication 9, dans lequel ladite partie de stockage de données numériques comprend une mémoire de CI (82).

17. Support selon la revendication 9, dans lequel ladite partie de stockage de données numériques se compose d'une partie de ladite partie de stockage de données analogiques (66).

18. Support selon la revendication 9, dans lequel ladite encre magnétique comprend des particules de magnétite ayant un diamètre moyen de 0,5 µm et une force coercitive de 30 Oe et des particules de silicate de magnésium ayant un diamètre moyen de 20 µm.

19. Procédé de détermination de l'authenticité d'un support d'enregistrement de données, comprenant les étapes consistant à :
former sur le support d'enregistrement de données une partie de stockage de données analogiques (14, 24, 34, 44) qui est une couche d'encre magnétique qui se compose d'un liant et de particules magnétiques, ces particules magnétiques étant dispersées de façon non uniforme dans le liant et ces particules magnétiques ayant une dimension de 2 µm ou plus et de 40 µm ou moins, la partie de stockage de données analogiques stockant des données analogiques qui sont basées sur le motif non uniforme des particules magnétiques sont spécifiques au support d'enregistrement de données ;
lire les données analogiques à partir de la partie de stockage de données analogiques ;
former sur le support d'enregistrement de données une partie de stockage de données numériques (12, 22, 32, 42) qui stocke des données numériques correspondant aux données analogiques lues à partir de ladite partie de stockage de données analogiques ;
lire les données numériques à partir de la partie de stockage de données numériques ; et
comparer les deux données lues l'une à l'autre, de manière à déterminer l'authenticité du support d'enregistrement de données quand les données lues coïncident l'une avec l'autre.

20. Procédé selon la revendication 19, dans lequel lesdites particules magnétiques ont une force coercitive de 60 Oe ou moins.

21. Procédé selon la revendication 19, dans lequel lesdites particules magnétiques ont une forme de paillette.

22. Procédé selon la revendication 19, dans lequel ladite étape de formation d'une partie de stockage de données analogiques comprend une sous-étape consistant à coller une soudure sur le support d'enregistrement de données, la soudure comprenant ladite couche d'encre magnétique qui se compose dudit liant et desdites particules magnétiques dispersées de façon non uniforme dans le liant.

23. Procédé selon la revendication 19, dans lequel ladite étape de formation d'une partie de stockage de données analogiques comprend une sous-étape consistant à transférer une feuille métallique sur le support d'enregistrement de données, la feuille métallique comprenant ladite couche d'encre magnétique qui se compose dudit liant et desdites particules magnétiques dispersées de façon non uniforme dans le liant.

24. Procédé selon la revendication 19, dans lequel ladite étape de formation d'une partie de stockage de données numériques comprend une sous-étape consistant à imprimer un code à barres (12, 32) désignant les données numériques sur le support d'enregistrement de données.

25. Procédé selon la revendication 19, dans lequel ladite étape de formation d'une partie de stockage de données numériques comprend une sous-étape consistant à écrire les données numériques dans une mémoire de CI (42) proposée dans le support d'enregistrement de données.

26. Procédé selon la revendication 19, dans lequel lesdites particules magnétiques comprennent des particules de paillette de permalloy ayant un diamètre moyen de 20 µm et une force coercitive de 30 Oe.

27. Procédé de détermination de l'authenticité d'un support d'enregistrement de données, comprenant les étapes consistant à :
former sur le support d'enregistrement de données une partie de stockage de données analogiques (54, 66, 74, 84) qui est une couche d'encre magnétique qui se compose d'un liant, de particules non magnétiques, ces particules non magnétiques étant dispersées de façon non uniforme dans le liant et ces particules non magnétiques ayant une dimension de 2 µm ou plus, et de particules magnétiques plus petites que les particules non magnétiques, la partie de stockage de données analogiques stockant des données analogiques qui sont basées sur le motif non uniforme des particules non magnétiques et sont spécifiques au support d'enregistrement de données ;
lire les données analogiques à partir de la partie de stockage de données analogiques ;
former sur le support d'enregistrement de données une partie de stockage de données numériques (52, 66, 72, 82) qui stocke des données numériques correspondant aux données analogiques lues à partir de ladite partie de stockage de données analogiques ;
lire les données numériques à partir de ladite partie de stockage de données numériques ; et
comparer les deux données lues l'une à l'autre, de manière à déterminer l'authenticité du support d'enregistrement de données quand les données lues coïncident l'une avec l'autre.

28. Procédé selon la revendication 27, dans lequel lesdites particules non magnétiques ont un diamètre de 2 µm ou plus.

29. Procédé selon la revendication 27, dans lequel lesdites particules magnétiques ont un diamètre de 10 µm ou moins.

30. Procédé selon la revendication 27, dans lequel lesdites particules magnétiques ont une force coercitive de 60 Oe ou moins.

31. Procédé selon la revendication 27, dans lequel lesdites particules non magnétiques ont une forme de paillette.

32. Procédé selon la revendication 27, dans lequel ladite étape de formation d'une partie de stockage de données analogiques comprend une sous-étape consistant à coller une soudure sur le support d'enregistrement de données, la soudure comprenant ladite couche d'encre magnétique qui se compose dudit liant, desdites particules non magnétiques dispersées de façon non uniforme dans le liant, et desdites particules magnétiques plus petites que les particules non magnétiques.

33. Procédé selon la revendication 27, dans lequel ladite étape de formation d'une partie de stockage de données analogiques comprend une sous-étape consistant à transférer une feuille métallique sur le support d'enregistrement de données, la feuille métallique comprenant ladite couche d'encre magnétique qui se compose dudit liant, desdites particules non magnétiques dispersées de façon non uniforme dans le liant, et desdites particules magnétiques plus petites que les particules non magnétiques.

34. Procédé selon la revendication 27, dans lequel ladite étape de formation d'une partie de stockage de données numériques comprend une sous-étape consistant à imprimer un code à barres (72) désignant les données numériques sur le support d'enregistrement de données.

35. Procédé selon la revendication 27, dans lequel ladite étape de formation d'une partie de stockage de données numériques comprend une sous-étape consistant à écrire les données numériques dans une mémoire de CI (82) proposée dans le support d'enregistrement de données.

36. Procédé selon la revendication 27, dans lequel ladite encre magnétique comprend des particules de magnétite ayant un diamètre moyen de 0,5 µm et une force de coercitive de 30 Oe et des particules de silicate de magnésium ayant un diamètre moyen de 20 µm.
